# EUROPEAN PATENT SPECIFICATION

(11) **EP 0 474 608 B1**
(45) Date of publication and mention of the grant of the patent: **27.12.1995**
(21) Application number: 91830365.2
(22) Date of filing: 05.09.1991
(51) Int. Cl.: B05B 3/04

(54) **Angularly movable sprinkler with watertight rotary connection**
Im Winkel bewegbare Beregnungsvorrichtung mit einer wasserdichten Drehverbindung
Arroseur mobile angulairement avec une connection rotative étanche

(30) Priority: 07.09.1990 IT 948790
(43) Date of publication of application: 11.03.1992
(73) Proprietor: Casagrande, Antonio, I-50011 Bagno a Ripoli, Firenze (IT)
(72) Inventor: Casagrande, Antonio, I-50011 Bagno a Ripoli, Firenze (IT)
(74) Representative: Mannucci, Gianfranco, Dott.-Ing.

(56) References cited:
- AU-B- 499 892
- US-A- 2 712 457
- US-A- 2 946 517
- US-A- 3 764 073

## Description

The invention relates to an improvement tending to make a sprinkler which is angularly movable about a vertical axis, with a watertight rotary connection between the fixed part and the movable part, smoother-running and more efficient. A sprinkler of this type is known from US-A-2,946,517, which discloses a sprinkler with a connection comprising a sleeve for engagement with a fixed part and a two-diameter bearing body, clamped together. According to the present invention, the sprinkler further comprises: a cap end piece of the movable part, for fitting onto the portion of greater diameter of said body; a bearing between said end piece and said body; a seal between an internal wall of the end piece and an internal surface of the body; and a stop ring engaged on the inner wall of the end piece to oppose a shoulder of the two-diameter body.

Said stop ring may be an elastic split ring, which engages in an internal annular groove of the end piece.

A protection ring may be clamped between the sleeve and the two-diameter body, to protect the bearing.

A washer acts as a bearing to the seal, and a spring stabilises the complex of the assembled parts.

The invention will be better understood by following the description and accompanying drawing, which latter shows a practical, non-limiting illustrative embodiment of said invention. In the drawing:

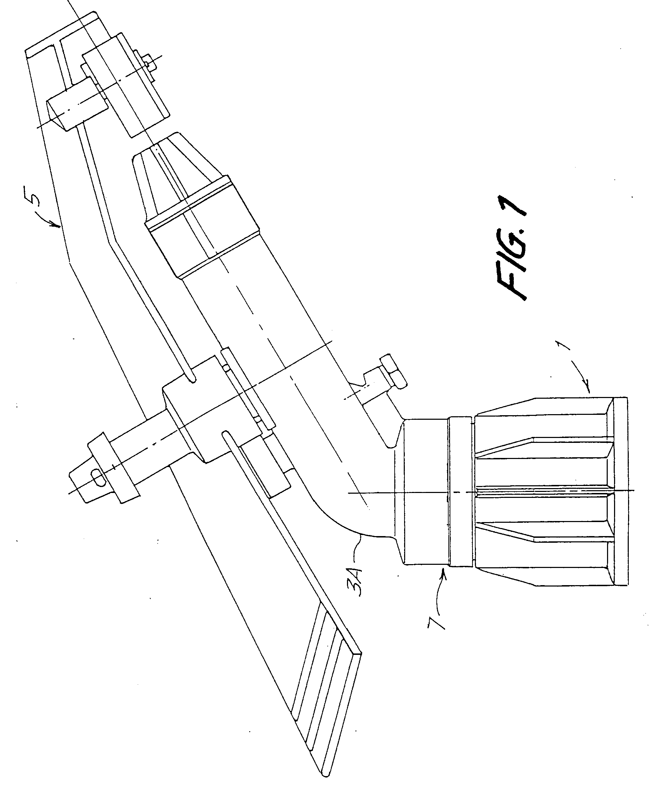

Fig. 1 shows a general view of the orientable nozzle sprinkler device;

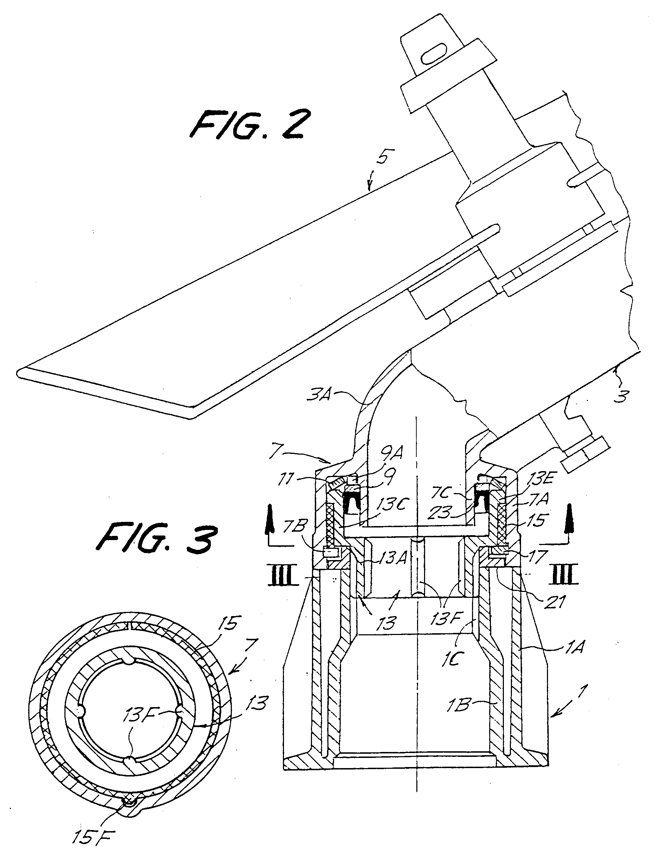

Fig. 2 shows an enlarged detail in partial section;
Fig. 3 is a local section according to III-III of Fig. 2;
Fig. 4 shows an exploded view of the various components illustrated in Fig. 3, in section;
Figs 5, 6 and 7 show views from the lines V-V, VI-VI and VII-VII in Fig. 4.

In the drawing 1 indicates the connection sleeve which engages with the end piece of the sprinkler apparatus in the manner of a vertical branch of the same, for the rotatable nozzle must be oriented about a vertical axis. 3 indicates as a whole the nozzle with spray head inclined and combined with the hydraulic drive mechanism indicated as a whole by 5 and of a type known per se. The nozzle 3 with an elbow 3A reaches a ferrule or end piece 7 for its rotatable engagement with the fixed complex. This ferrule 7 in particular has an external wall 7A with an internal annular groove 7B and an internal wall 7C intended to cooperate with a seal. The sleeve 1 has an external wall 1A and an internal wall 1B that forms the passage for the liquid for irrigation, with an internal thread 1C for its coupling with the other parts of the rotary joint to be described and leading to the end piece 7.

Housed between the two walls 7A and 7C of the end piece 7 is a washer 9 for a seal, engaging in an appropriate manner with pegs 9A in housings 7E internal to the end piece 7. Also housed between said two walls 7A and 7C is an inclined annular locating spring 11.

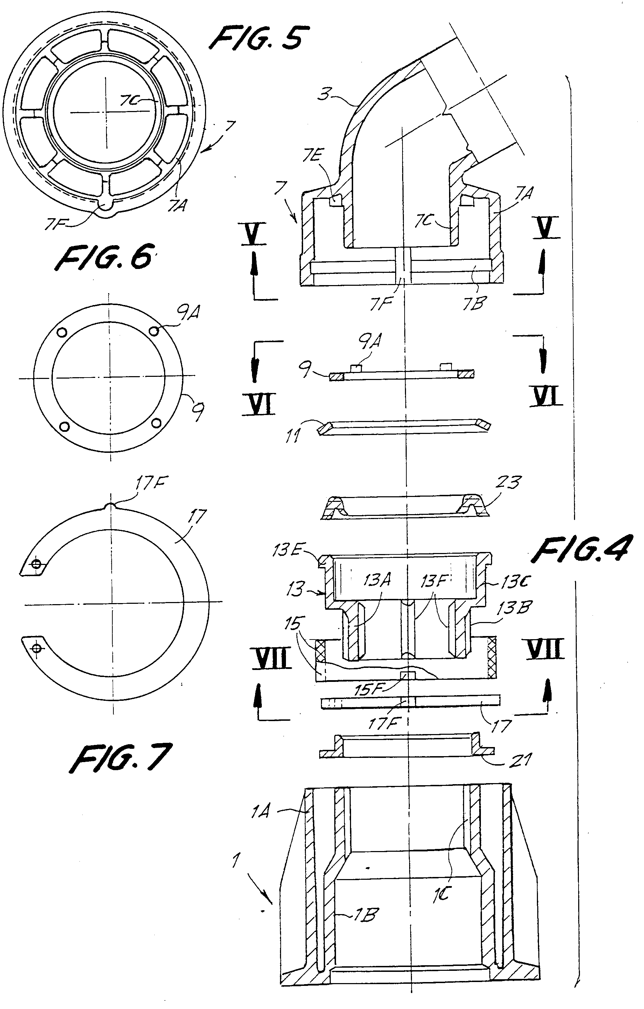

13 indicates a body for a bearing, formed by a first portion of reduced diameter 13A with external thread 13B for engagement in the thread 1C; the second portion 13C of greater diameter is received immediately inside the external wall 7A of the end piece 7, against which wall an external rim 13E of said bearing body 13 may almost touch. On the outside of the area 13C immediately beneath the rim 13E a cylindrical-walled bearing 15 of suitable anti-friction material (for example acetal resin) is received, and is therefore comprised between the wall 13C and the internal surface of the external wall 7A of the end piece 7. The bearing 15 is held inside the wall 7A by an elastic split ring 17 that is made to expand in the groove 7B, in such a way as to hold both the bearing 15 and the body 13 by acting on the shoulder between the two walls 13C and 13A. The two components 1 and 13 are coupled together by the threads 1C and 13B and clamp between them an L-shaped protection ring 21 with a lip projecting outwards to protect the bearing, with the external rim of this protection ring 21 just touching the internal end rim of the wall 7A. For the operation of tightening, the internal surface of the portion 13A of the body 13 may be provided with reliefs 13F or equivalents. Between the internal wall 7C of the end piece 7 and the internal surface of the wall 13C of the body 13 there is arranged an inverted U-shaped seal 23 to withstand the internal pressure; this seal is positioned in the hollow space between the walls 7C and 13C and may bear against the ring 9 for said seal; the seal 23 may also be placed elsewhere than shown in Fig. 3. Whatever the case, said seal ensures leaktightness between the fixed complex to which the components 1 and 13 belong and the movable part 3, 3A with the end piece 7, which can rotate.

The two mutually rotating parts are thus easily guided while ensuring leaktightness but reducing to a minimum the friction that could obstruct the movement of the nozzle 3 about the vertical axis of the end piece 7. The bearing 15 ensures the possibility of rotation and the washer 9 engaging in the part 3, 3A, 7 acts as a bearing to the seal 23 that receives the internal pressure of the liquid.

The cross-sections of flow are thus comparatively very high and there is therefore no loss of load in the area of the connection between the fixed part and the movable part.

Advantageously, for the stability of the various components, a longitudinal groove 7F is provided in the shell of the end piece 7 to engage with projections 17F and 15F respectively to prevent relative rotation of the parts 17 and 15 with respect to the end piece 7.

In addition to holding the bearing 15, the stop ring 17 also engages in the shoulder formed between the parts 13A and 13C of the body 13, in order to hold the movable part upon the fixed part, except in dismantling which can be performed by unscrewing the body 1 from the body 13.

From a comparison with the types of sprinklers currently on the market, the advantages of the device described may be appreciated.

It will be understood that the drawing shows only an illustrative embodiment which is given purely as a practical demonstration of the invention. Any reference numbers appearing in the accompanying claims are intended to facilitate the reading of the claims with reference to the description and drawing, and do not limit the scope of protection represented by the claims.

## Claims

1. Sprinkler angularly movable about a vertical axis with a watertight rotary connection between the fixed part and the movable part, said connection comprising a sleeve (1) for engagement with the fixed part and a two-diameter bearing body (13), clamped together, characterised in that said connection comprises also: a cap end piece (7) of the movable part (3), for fitting onto the portion of greater diameter (13C) of the body (13); a bearing (15) between said end piece (7) and said body (13); a seal (23) between an internal wall (7C) of the end piece (7) and an internal surface (13C) of the body (13); and a stop ring (17) engaged on the inner wall of the end piece (7) to oppose a shoulder of the two-diameter body (13).

2. Sprinkler according to Claim 1, characterised in that said stop ring (17) is an elastic split ring that engages in an internal annular groove (7B) of the end piece (7).

3. Sprinkler according to preceding claims, characterised in that a protection ring (21) is clamped between the sleeve (1) and the body (13) to protect the bearing.

4. Sprinkler according to preceding claims, characterised in that a washer (9) acts as a bearing to the seal, and a spring (11) stabilises the complex of the assembled parts.

## Patentansprüche

1. Beregnungsvorrichtung, die in einem Winkel bezüglich einer vertikalen Achse bewegbar ist, mit einer wasserdichten Drehverbindung zwischen dem feststehenden Teil und dem beweglichen Teil, wobei die Verbindung eine Hülse (1) aufweist zum Eingriff mit dem feststehenden Teil und einen Zwei-Durchmesser-Lagerkörper (13), die zusammengeklemmt sind,
dadurch **gekennzeichnet,** daß die Verbindung weiterhin aufweist: ein Endkappenstück (7) des beweglichen Teils (3) zum Passen auf den Abschnitt des größeren Durchmessers (13C) des Körpers (13), ein Lager (15) zwischen dem Endstück (7) und dem Körper (13), eine Dichtung (23) zwischen einer Innenwandung (7C) des Endstückes (7) und einer Außenfläche (13C) des Körpers (13) und ein Stopring (17), der an der Innenwand des Endstückes (7) angreift, um einer Schulter des Körpers (13) mit zwei Durchmessern gegenüberzuliegen.

2. Beregnungsvorrichtung nach Anspruch 1, dadurch **gekennzeichnet,** daß der Stopring (17) ein elastischer Splitring ist, der in eine ringförmige Innennut (7B) des Endstückes (7) eingreift.

3. Beregnungsvorrichtung nach einem der vorstehenden Ansprüche, dadurch **gekennzeichnet,** daß ein Schutzring (21) zwischen die Hülse (1) und den Körper (13) geklemmt ist, um das Lager zu schützen.

4. Beregnungsvorrichtung nach einem der vorstehenden Ansprüche, dadurch **gekennzeichnet,** daß eine Scheibe (9) als ein Lager für die Dichtung dient, wobei eine Feder (11) den Komplex der zusammengebauten Teile stabilisiert.

## Revendications

1. Arroseur mobile angulairement autour d'un axe vertical avec un raccord rotatif étanche entre la partie fixe et la partie mobile, ce raccord comprenant un manchon (1) pour l'engagement avec la partie fixe et un corps de support à deux diamètres (17), bridés ensemble, caractérisé en ce que le raccord comprend également :
un élément d'extrémité à capuchon (7) de la partie mobile (3), pour s'adapter sur la portion de plus grand diamètre (13C) du corps (13) ; un support (15) entre l'élément d'extrémité (7) et le corps (13) une étanchéité (23) entre une paroi interne (7C) de l'élément d'extrémité (7) et une surface interne (13c) du corps (13) ; et une bague de butée (17) engagée sur la paroi interne de l'élément d'extrémité (7) pour s'appuyer sur l'épaulement du corps à deux diamètres (13).

2. Arroseur selon la revendication 1, caractérisé en ce que la bague de butée (17) est une bague élastique fendue qui vient s'engager dans une gorge annulaire interne (7B) de l'élément d'extrémité.

3. Arroseur selon les revendications précédentes, caractérisé en ce qu'une bague de protection (21) est bridée entre le manchon (1) et le corps (13) pour protéger le support.

4. Arroseur selon les revendications précédentes, caractérisé en ce qu'une rondelle (9) agit comme support sur l'étanchéité, et un ressort (11) stabilise l'ensemble des parties montées.
